# EUROPEAN PATENT APPLICATION

(11) **EP 0 645 688 A1**
(43) Date of publication of application: **29.03.1995**
(21) Application number: 94202652.7
(22) Date of filing: 16.09.1994
(51) Int. Cl.: G06F 1/00

(54) **Method for the identification of users of telematics servers**

(30) Priority: 21.09.1993 NL 9301633
(71) Applicant: Koninklijke PTT Nederland N.V., NL-2509 CH The Hague (NL)
(72) Inventor: van den Bos, Marius Jan Bartele, NL-9302 EL Roden (NL); Steenbeke, Johannes Gerhardus Marinus, NL-9718 JZ Groningen (NL); de Jager, Paul, NL-9468 EV Annen (NL); Stinesen, Vincentius Wilhelmus, NL-9711 PH Groningen (NL)

(57) **Abstract**

Telematics system, comprising a telecommunications system and an independent identification server, suitable and designed for identification and possibly verification of subscribers who wish to make use of telematics servers likewise linked to said telecommunications system. The identification server works for a plurality of telematics servers, as a result of which the identification/verification procedure is uniform for all those telematics servers.

## Description

### A. BACKGROUND OF THE INVENTION

The invention relates to a method for the identification of users who wish to make use, via a terminal and a telecommunications system, of a telematics server. The invention also relates to a telecommunications system and an identification server, suitable and designed for implementing such a method.

If at present a user - via a telecommunications system - wishes to make use of a telematics service, for example an electronic database for enquiring for data, or an electronic mail service, the first step to take place, after the user has set up a link to that service, is always an identification and (in many cases) verification procedure (sometimes known as authentication procedure). This comprises the user making himself known to the service (i.e. to the server via which the service is offered) by keying in his user identifier on his terminal, in many cases followed by additional keying in of a verifier (password) which, for example, is compared on the telematics server side with a verifier stored there, or which is enciphered both on the user side and on the server side with identical or complementary enciphering algorithms, after which the two results are compared with one another. A drawback of this situation - which becomes increasingly noticeable as the number of services/servers increases - is that each server has its own identification procedure, including identifiers, passwords, etc. There is general awareness of this problem.

### B. SUMMARY OF THE INVENTION

Applicant has come to realize that the services proper, and the identification preceding these can be separated and that the identification can be regarded, as it were, as a separate service for the service suppliers (and their users). When a service is dialled, use is made, according to the present invention, of two services, first the identification service and then the actual telematics service asked for. All this can be controlled in a relatively simple manner by the telecommunications system which serves as the link between the user and the telematics server. This control may, incidentally, also be effected by the telematics server itself, independently of the telecommunications system.

The invention therefore comprises a method for the identification of users who wish to make use, via a terminal and a telecommunications system, of a telematics server, the following steps being carried out according to the invention:
- step 1:: the user activates a direct or indirect link via the telecommunications system between his terminal and an identification server;
- step 2:: a terminal identifier (TID), belonging to that terminal, is transmitted to the identification server;
- step 3:: the identification server asks the user to input his user identifier (UID);
- step 4:: the user sends his user identifier, and the identification server compares this with user identifiers previously stored in the identification server and, in the event of agreement between one of these stored user identifiers and the identifier received, sends this identifier or an image thereof (UID') to a telematics server selected by the user.

The method according to the invention ensures that use can be made of one identification server which is able to attend to the identification of users for various telematics servers. Generally, a verification step will also be necessary, which likewise can be carried out by the identification server. The result of the user identification is presented to the telematics server required by the user, in the form of a (verified) user identifier in a form required by the telematics server. Thereafter, the telematics server is able to further continue the link to the user terminal, and the identification server can serve other users and telematics servers.

The telematics server required can be selected in step 1 or alternatively in a later step. In step 2, the terminal identifier is sent, either directly to both the identification server and the telematics server, or first to the telematics server which in turn sends said identifier to the identification server. The terminal identifier can be sent by the terminal itself or alternatively by a terminal server. Said terminal server can be separate from the telecommunications system (for example a local network) and form the link between the terminal and the telecommunications system, or alternatively form part of the telecommunications system, as a result of which the terminal identifier is in fact emitted from the telecommunications system itself. In step 4, a verification step - known per se - can be intercalated, the identity of the user being verified by means of a verifier being exchanged.

In addition to the above method, the invention also comprises a telematics system, comprising a telecommunications system and one or more terminals and telematics servers connected thereto, provided, according to the invention, with an identification server, connected to said telecommunications system or comprised by said telecommunications system, and suitable and designed for identifying users who, by means of a terminal, activate a link between said terminal and a telematics server, a user activating a direct or indirect link between said terminal and the identification server, and the terminal or a terminal server transmitting a terminal identifier (TID) to the identification server, the user further sending his user identifier (UID) to the identification server, which compares this with user identifiers previously stored in the identification server and, in the event of agreement between one of said stored user identifiers and the identifier received, sends said identifier or an image thereof (UID') to a telematics server selected by the user. The invention also comprises an identification server which is eminently able to form part of the telematics system according to the invention.

### C. REFERENCES

None.

### D. ILLUSTRATIVE EMBODIMENTS

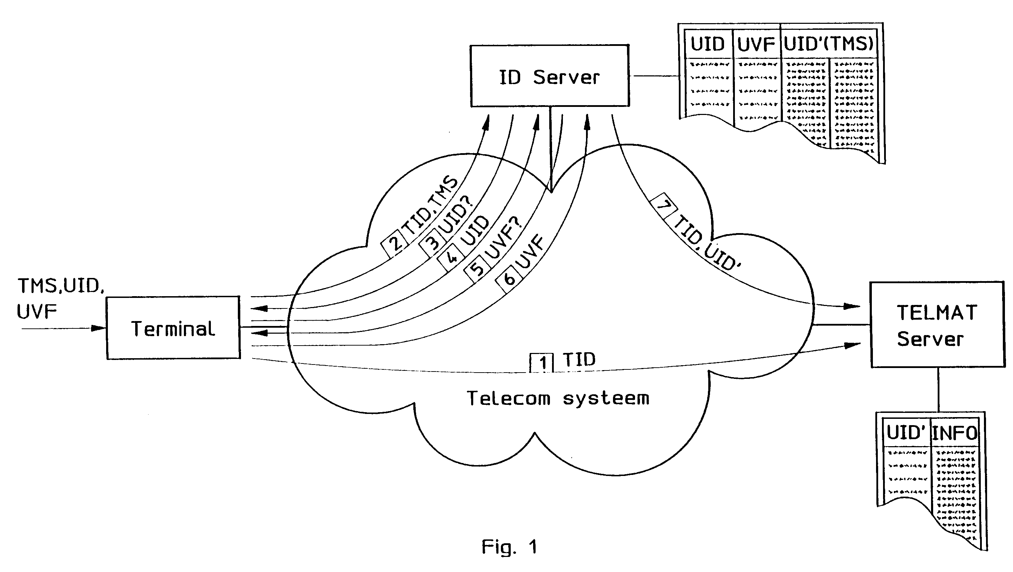

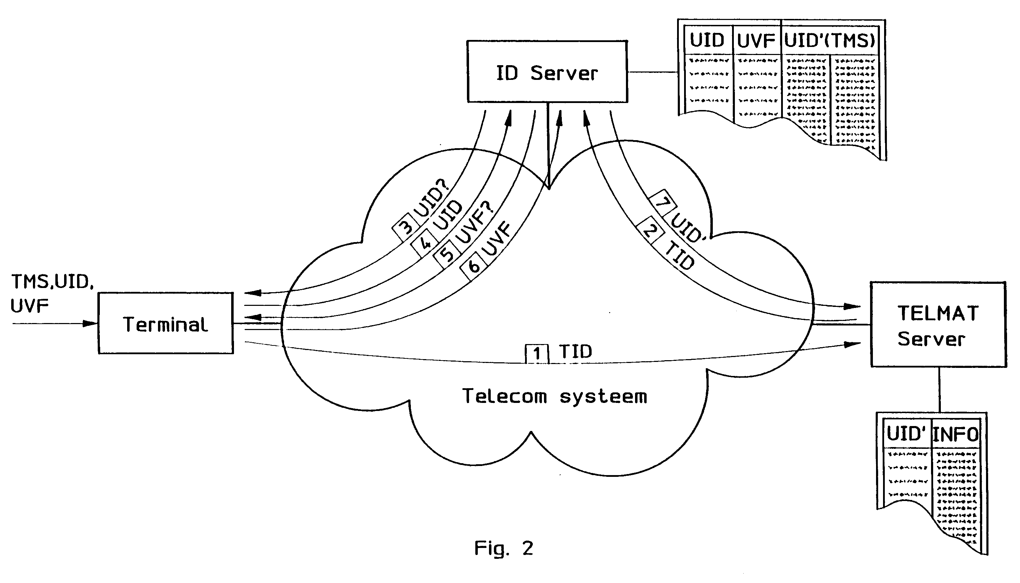

Fig. 1 shows, in the form of a diagram, a first illustrative embodiment of a telematics system according to the invention in which the method presented can be implemented. Fig. 2 shows a slightly different illustrative embodiment.

Fig. 1 shows a telecommunications system to which a terminal is connected, an identification server and a telematics server, for example a computer system for on-line enquiry for data. Via the terminal - for example a PC with modem and communications software - a user can activate a telecommunications link to the telematics server required. At the same time - or directly afterwards - a link can be activated to the identification server. Via the first link, a terminal identifier TID is sent to the selected telematics server (1); via the last link, the same terminal identifier TID is sent to the identification server, together with a code TMS which indicates the telematics server selected (2). Said identification server then carries out an identification protocol which consists in the identification server asking the user for his user identifier VID (3), the user sending the latter (4), and the latter being looked up by the identification server in a register containing user identifiers. At the same time, an associated user verifier is looked up, as well as user codes UID' applicable to the different telematics servers (one user can be known under different user codes to different telematics servers). The user is then asked for his verifier (password) (5), the user sends the latter (6), and that verifier is compared with the verifier from the register. In the event of agreement, a link is activated, on the basis of the telematics server TMS selected, to that telematics server, and the terminal identifier TID and the user code (from the register of the identification server) is sent to the telematics server (7). A better method of verification is, for example, the "challenge signed response" method. This involves the user sending his verifier to the identification server, after which the identification server sends a random code string to the user who enciphers this string with a secret key (for example stored in a smart card) and sends the encipherment result to the identification server. The identification server deciphers that enciphered string with the aid of a key which is related to the verifier received. Thus the user can prove his identity. Then, links between the terminal and the identification server, and between the identification server and the telematics server are broken, and the user is able to exchange messages via the link between his terminal and the telematics server selected, no further identification/verification procedure being necessary. After receiving the user code UID', the telematics server has also been able to find previously stored further user data, for example concerning the settling of charges relating to the use of the service.

The illustrative embodiment shown diagrammatically in Fig. 2 differs from the above illustrative embodiment insofar as the telematics server, after receiving the terminal identifier TID from the terminal (1), activates a link to the identification server and via this link sends the terminal identifier (2). Thereupon, the identification server activates a link to the terminal and asks for the user identifier UID of the user (3). The verification protocol proceeds as indicated above (4, 5, 6). In the event of a positive result, the user code UID', valid for the telematics server selected, of the user is sent to the telematics server which then breaks the link to the identification server. The link between the identification server and the terminal is also broken, and further messages are exchanged between the terminal and the telematics server. In the case of this last option, the TID is therefore not sent directly to the identification server, as for the first option, but via the telematics server. After the TID has been received, the identification server activates a link to the terminal whose TID had been received.

The identification server thus serves for executing an identification and verification protocol (log-in protocol) for any other telematics server. The advantage is that users always deal with the same identification server and are always able to log in in the same manner and always using the same identifier and verifier, even if the telematics servers change. This method is eminently applicable in an ISDN system in which one terminal is able to activate two links simultaneously, in this case to the identification server and the telematics server. ISDN is not a precondition, however, since the links need not necessarily be active simultaneously, but may alternatively be activated successively.

## Claims

1. Method for the identification of users who wish to make use, via a terminal and a telecommunications system, of a telematics server,
CHARACTERIZED BY
step 1: the user activates a direct or indirect link via the telecommunications system between his terminal and an identification server;
step 2: a terminal identifier (TID), belonging to that terminal, is transmitted to the identification server;
step 3: the identification server asks the user to input his user identifier (UID);
step 4: the user sends his user identifier, and the identification server compares this with user identifiers previously stored in the identification server and, in the event of agreement between one of these stored user identifiers and the identifier received, sends this identifier or an image thereof (UID') to a telematics server selected by the user.

2. Method according to Claim 1, CHARACTERIZED IN THAT in step 1 the user activates a link to the identification server, and in step 2 the terminal identifier is transmitted directly to the identification server.

3. Method according to Claim 1, CHARACTERIZED IN THAT in step 1 the user activates a link to the telematics service required, and in step 2 the terminal identifier is first transmitted to the telematics server, after which the telematics server activates a link to the identification server and sends that terminal identifier on to the identification server.

4. Method according to Claim 1, CHARACTERIZED IN THAT in step 2 the terminal identifier is transmitted by the terminal itself.

5. Method according to Claim 1, CHARACTERIZED IN THAT in step 2 the terminal identifier is transmitted by a terminal server to which the terminal is connected, which terminal server does or does not form part of the telecommunications system.

6. Method according to Claim 1, CHARACTERIZED IN THAT in step 4 a verification step is intercalated in which the identification server, before sending the user identifier or image thereof to the telematics server, requests the user to send a user verifier (UVF), after which the identification server examines the verifier received and only sends the user identifier or image thereof to the telematics server if the result is positive.

7. Telematics system, comprising a telecommunications system and one or more terminals and telematics servers connected thereto, CHARACTERIZED BY an identification server, connected to said telecommunications system or comprised by said telecommunications system, and suitable and designed for identifying users who, by means of a terminal, activate a link between said terminal and a telematics server, a user activating a direct or indirect link between said terminal and the identification server, and the terminal or a terminal server transmitting a terminal identifier (TID) to the identification server, the user further sending his user identifier (UID) to the identification server, which compares this with user identifiers previously stored in the identification server and, in the event of agreement between one of said stored user identifiers and the identifier received, sends said identifier or an image thereof (UID') to a telematics server selected by the user.

8. Identification server for identifying users of one or more telematics servers which, by means of a terminal connected to a telecommunications system, are able to set up a link to such a telematics server, the terminal, via the telecommunications system, setting up a direct or indirect link to the identification server and sending a terminal identifier (TID), after which the user sends a user identifier (UID) and the identification server compares this with user identifiers previously stored in the identification server and, in the event of agreement between one of said stored user identifiers and the user identifier received, sends said identifier or an image thereof (UID') to a telematics server to be selected, or already selected, by the user.
